# EUROPEAN PATENT APPLICATION

(11) **EP 3 069 824 A1**
(43) Date of publication of application: **21.09.2016**
(21) Application number: 15159965.1
(22) Date of filing: 19.03.2015
(51) Int. Cl.: B25B 21/00, B25B 21/02, B25B 23/147, F16D 7/02, F16D 59/02, F16D 65/14, H02K 49/10

(54) **MAGNETIC LEVITATION BRAKE MOTOR**

(71) Applicant: Mijy-Land Industrial Co., Ltd., Taipei Shian (TW)
(72) Inventor: HSU, Hsiu-Lin, Taipei Shian (TW)
(74) Representative: Hellmich, Wolfgang

(57) **Abstract**

A magnetic levitation brake motor (1), which is very applicable to automatic screwdrivers. A motor providing power output is combined with a magnetic levitation clutch (2), the alternating effect of homopolar repulsion and heteropolar attraction in the operation of the magnetic levitation clutch can reduce the motor starting current, and the motor has less inertia moment and friction force, reducing the heating and damage of MOSFET controlling drive motor current. In the operation, the magnetic levitation clutch (2) runs when the motor (1) is started, and the inertia moment is increased and the kinetic energy is accumulated. Under a load, the rotation speed of the magnetic levitation clutch (2) decreases and kinetic energy is released to increase the torque. The motor (1) stops when the preset torque is reached. The magnetic levitation clutch (2) keeps running due to inertia moment, but it stops gradually due to the reluctance generated by pole effect.

## Description

### BACKGROUND OF INVENTION

### 1. Field of the Invention

The present invention is related to the combinational structure of motor and clutch for automatic screwdrivers, more particularly to a magnetic levitation brake motor which is applicable to automatic screwdrivers.

### 2. Description of Related Art

When the motor changes from stationary state into operating state, a large kinetic energy shall be provided instantly to destroy the balance, so that the rotor rotates. The lower the rotor load is, the less is the starting kinetic energy required. On the contrary, the higher the rotor load is, the more is the starting kinetic energy required.

For example, when the automatic screwdriver is being started, a high current supply is usually required, so as to start high-speed operation of motor smoothly, and it must be started for driving screws each time, so it consumes much power. In the operation using a fixed torque value to drive general screws, the screw has no load (slight and ignored) at the beginning, and then the screw thread contacts the object, the frictional drag generates a little load, this process occurs in the idle stroke of screw. Finally, the screw head contacts the object surface, the load increases to the fixed torque rapidly due to the tension. This starting current is low, but the torque value is limited, and the drive range is limited.

The automatic screwdriver of high torque needs current for starting, consuming power. The maximum torque value is sometimes reached when implementing driving, the trip of clutch generates considerable counterforce, resulting in torque error in the operator's driving operation, and it is likely to cause occupational injury to the operator in the long run.

Thus, to overcome the aforementioned problems of the prior art, it would be an advancement if the art to provide an improved structure that can significantly improve the efficacy.

Therefore, the inventor has provided the present invention of practicability after deliberate design and evaluation based on years of experience in the production, development and design of related products.

### SUMMARY OF THE INVENTION

The primary objective of the present invention is to provide a sort of magnetic levitation brake motor, so as to reduce the torque error generated by automatic screwdriver during operation and the torque accuracy attenuation in long-term operation, so as to increase the overall torque accuracy.

Another objective of the present invention is to provide a magnetic levitation brake motor, so as to reduce the starting current of automatic screwdriver, and it has slow start and provides braking effect on stop.

In order to attain Said objectives, the present invention designs a magnetic levitation brake motor, comprising a motor which provides power source; and a magnetic levitation clutch, combined with the shaft of motor, it has alternating magnetic repulsion and attraction, providing the motor with slow start and braking effect. Under the alternating effect of homopolar repulsion and heteropolar attraction when the magnetic levitation clutch is in operation, the motor starting current can be reduced, and the motor has relatively low inertia moment and friction force, reducing the heating and damage of MOSFET controlling drive motor current.

The magnetic levitation clutch comprises of a driving part, a passive part contacting the driving part, and a latch for connecting the driving part and passive part.

There are at least two magnetic bodies dislocated in uniform distribution on the contact surface of the driving part and the passive part respectively, and they have the same polarity.

There is a first elastic body between the driving part and the passive part.

There is a second elastic body between the driving part and the passive part.

Said magnetic levitation clutch comprises of a driving part, located by the shaft of motor, and a passive part contacting the driving part, and there are at least two magnetic bodies dislocated in uniform distribution on the contact surface of the driving part and the passive part respectively, and they have opposite polarities.

Said magnetic levitation clutch comprises of a driving part, located by the shaft of motor, and a passive part contacting the driving part, the driving part and the passive part can be made of magnetic body and magnetic material respectively.

Said magnetic levitation clutch comprises of a driving part, located by the shaft of motor, and a passive part contacting the driving part. There are at least two magnetic bodies in separated and at least two concave magnetic materials dislocated on the contact surface of the driving part and the passive part respectively.

Said magnetic levitation clutch can be combined with the front end or rear end of the shaft inside the motor.

Said magnetic levitation clutch can be combined with the front end or rear end of the shaft outside the motor.

Said magnetic levitation clutch can be combined with the front end and rear end of the shaft outside the motor respectively in two sets.

Said magnetic levitation clutch can be combined with the reducing mechanism of the shaft outside the motor in the automatic screwdriver.

### BRIEF DESCRIPTION OF THE DRAWINGS

FIG. 1 is a structural representation of motor for automatic screwdriver of the present invention.
FIG. 2 is the structural representation of the magnetic levitation clutch of the present invention.
FIG. 3 is the structural representation of C1-C1 section view according to FIG. 2.
FIG. 4 is the structural representation of C2-C2 section view according to FIG. 2.
FIG. 5 is the structural representation of the magnetic body of magnetic levitation clutch of the present invention.
FIG. 6 is another structural representation of motor for automatic screwdriver of the present invention.
FIG. 7 shows another implementation of magnetic levitation clutch of the present invention.
FIG. 8 shows another implementation of magnetic levitation clutch of the present invention.
FIG. 9 (A) is the schematic diagram of combination of magnetic levitation clutch and motor of the present invention (I).
FIG. 9 (B) is the schematic diagram of combination of magnetic levitation clutch and motor of the present invention (II).
FIG. 10 (A) is the schematic diagram of combination of magnetic levitation clutch and motor of the present invention (III).
FIG. 10 (B) is the schematic diagram of combination of magnetic levitation clutch and motor of the present invention (IV).
FIG. 11 (A) is the schematic diagram of combination of magnetic levitation clutch and motor of the present invention (V).
FIG. 11 (B) is the schematic diagram of combination of magnetic levitation clutch and motor of the present invention (VI).

### DETAILED DESCRIPTION OF THE INVENTION

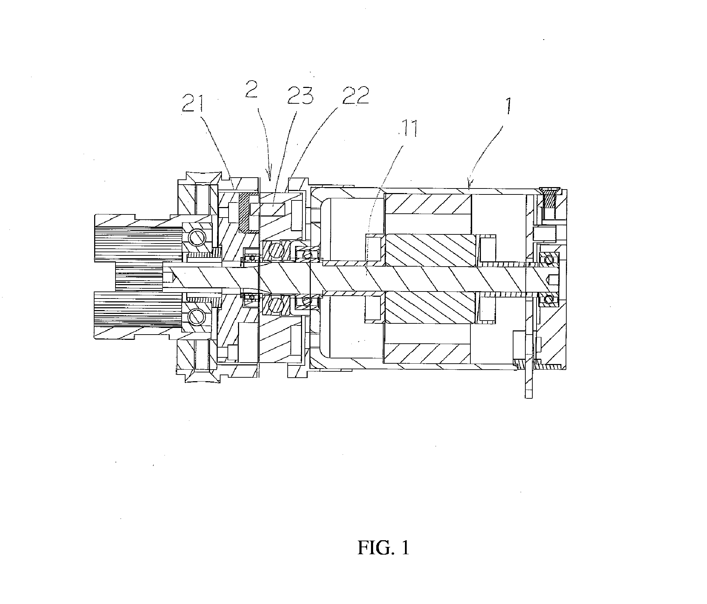

Referring to FIG. 1 which discloses a magnetic levitation brake motor, comprising a motor 1, providing power source; and a magnetic levitation clutch 2, providing braking effect.

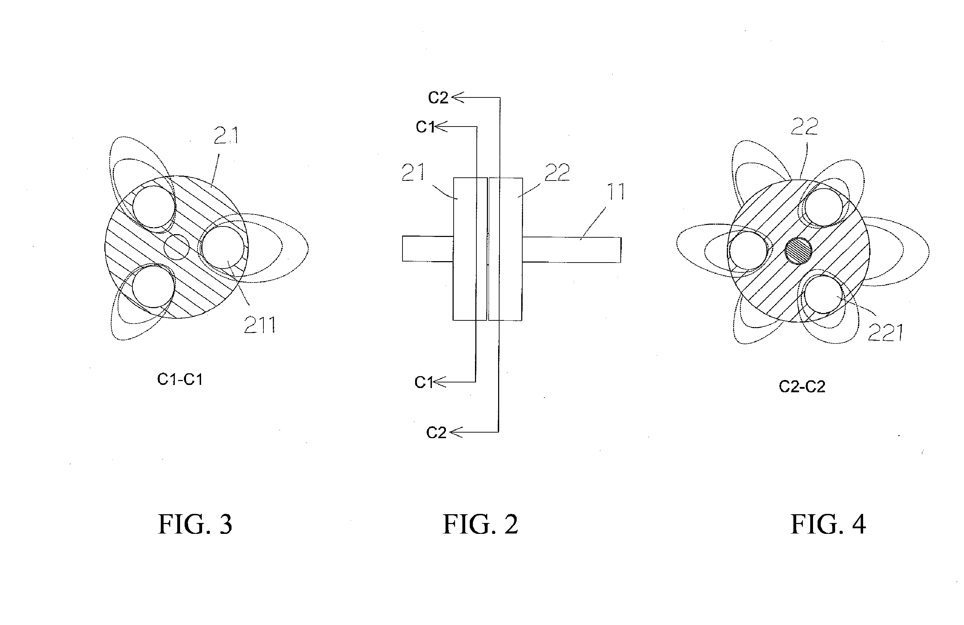

As shown in FIG. 1 - FIG. 5, the shaft 11 of the motor 1 penetrates through the magnetic levitation clutch 2, and they are fixed, so that the motor 1 can drive the magnetic levitation clutch 2 synchronously when it is started; the magnetic levitation clutch 2 comprises of a driving part 21; a passive part 22 contacting the driving part 21; and a latch 23 for connecting the driving part 21 and passive part 22.

There are at least two magnetic bodies 211 in uniform distribution on the contact surface of the driving part 21 and the passive part 22, in the same way, there are at least two magnetic bodies 221 in uniform distribution on the contact surface of the passive part 22 and driving part 21, and the magnetic body 211 on the surface of the driving part 21 and the magnetic body 221 on the surface of passive part 22 are dislocated, but the polarity is identical (i.e. N pole to N pole, or S pole to S pole), so that when the magnetic levitation clutch 2 is driven, the homopolar multiple magnetic bodies 211, 221 form repulsion, generating thrust spontaneously, and under the magnetic repulsion effect, the passive part 22 generates cogging torque when the driving part 21 is started or decelerated.

The magnetic levitation brake motor is used in the automatic screwdriver in practice, when the motor 1 is started, the shaft 11 drives the driving part 21 of the magnetic levitation clutch 2 synchronously, and the driving part 21 drives the passive part 22 through the latch 23. At this point, the inertia moment of shaft 11 increases, and more kinetic energy is accumulated as the speed increases, driving the gear mechanism, clutch mechanism and screwdriver head of the automatic screwdriver, so that the automatic screwdriver works normally. The thrust from homopolar repulsion of the magnetic bodies 211, 221 drives the motor 1 to rotate fast, and drives the gear mechanism and clutch mechanism, so that the automatic screwdriver works at high speed. It is unnecessary to drive the interlocked operation of all mechanisms directly in this starting process, only a low current is supplied to the motor 1 to start operation under no load, and under the thrust of the magnetic bodies 211, 221, the horsepower and rotation speed are increased gradually; so as to implement mechanical slow start.

During driving (i.e. screwdriver head meets soft or rigid load), the operation of the screwdriver head slows down, and the rotation speed of driving part 21 of the magnetic levitation clutch 2 decreases accordingly, the passive part 22 releases kinetic energy to the driving part 21, increasing the maximum torque of clutch mechanism.

When the driving is completed, as the clutch mechanism trips when the automatic screwdriver driving reaches the preset torque value, the driving part 21 of the magnetic levitation clutch 2 stops, the passive part 22 continues rotation due to inertia moment, but the kinetic energy of the rotation will be absorbed by the reluctance generated by homopolarity or heteropolarity of multiple contacting magnetic bodies 211, 221, generating braking effect, so the motor 1 is shut down.

In the driving process of the automatic screwdriver from motor 1 starting to the trip of clutch mechanism when the load reaches the maximum torque value and to the stop of motor 1, the counterforce generated by the process from high speed rotation to stop of the motor 1 is reduced by the auxiliary braking effect provided by magnetic levitation clutch 2. The occupational injuries to the operator are reduced; on the other hand, the torque errors caused by operator can be reduced, so as to increase the torque accuracy of automated tool.

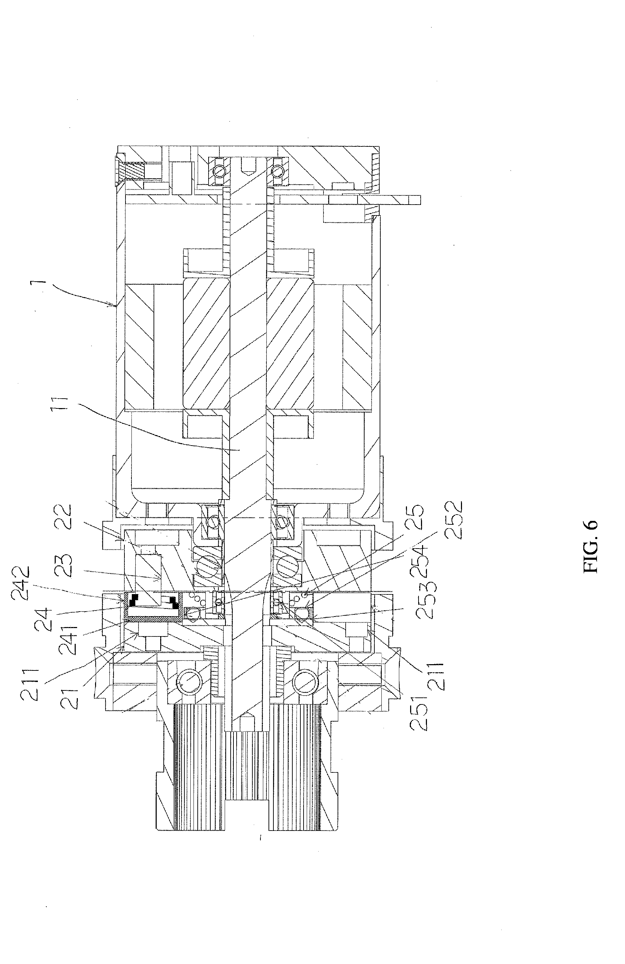

Referring to FIG. 6, the magnetic bodies 211, 221 between the driving part 21 and passive part 22 of the magnetic levitation clutch 2 can provide the braking effect for motor 1 stop, comprising a first elastic body 24, between the driving part 21 and the passive part 22 and away from shaft 11. The first elastic body 24 with the latch 23 through and is located in an oil seal 241, enclosed in a collision cover 242, so as to provide the driving part 21 with auxiliary braking effect in relation to passive part 22 when the automatic screwdriver reaches the preset torque value and the clutch mechanism trips, to enhance the braking effect; and a second elastic body 25, between the driving part 21 and the passive part 22 and near shaft 11. The second elastic body 25 is located on the bearing 251 on the peripheral surface of shaft 11, a side ring with more than one steel ball 252, retainer 254 and a brake disc 253, so that when the automatic screwdriver reaches the preset torque value and the clutch mechanism trips, the driving part 21 reduces the clash compared with passive part 22, and there is shock absorption.

In the implementation, when the motor 1 is started, other mechanisms have not been actuated, the shaft 11 rotates driving the elastic body 24 extrusion effect, so as to drive the accelerator, and to drive the gear mechanism and clutch mechanism, then the automatic screwdriver starts operation; thus, when the automatic screwdriver stops, the counter thrust of the magnetic levitation clutch 2 and the first elastic body 24 and the second elastic body 25 will provide motor 1 with the secondary auxiliary braking and shock absorption effects.

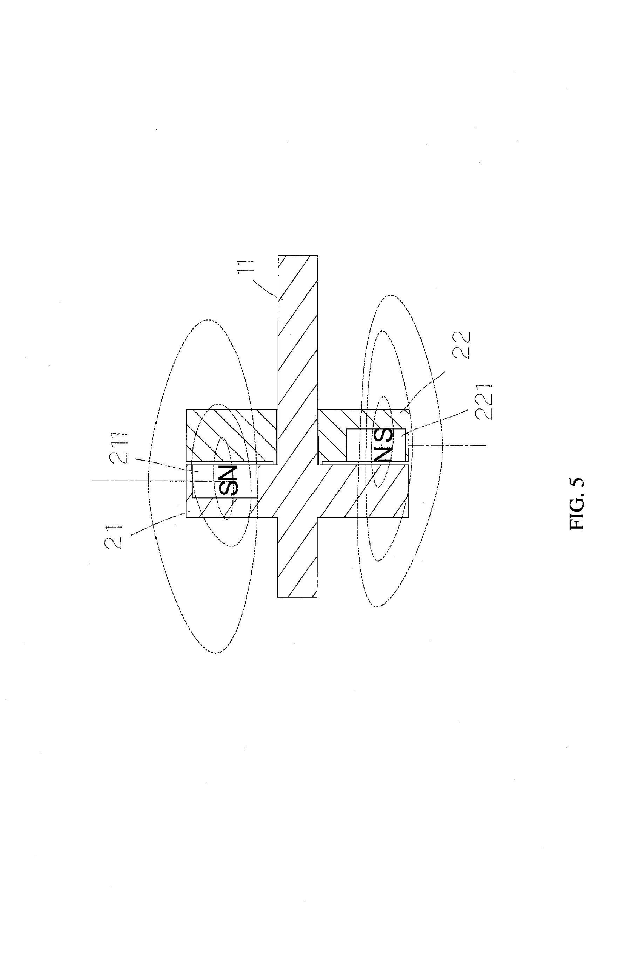

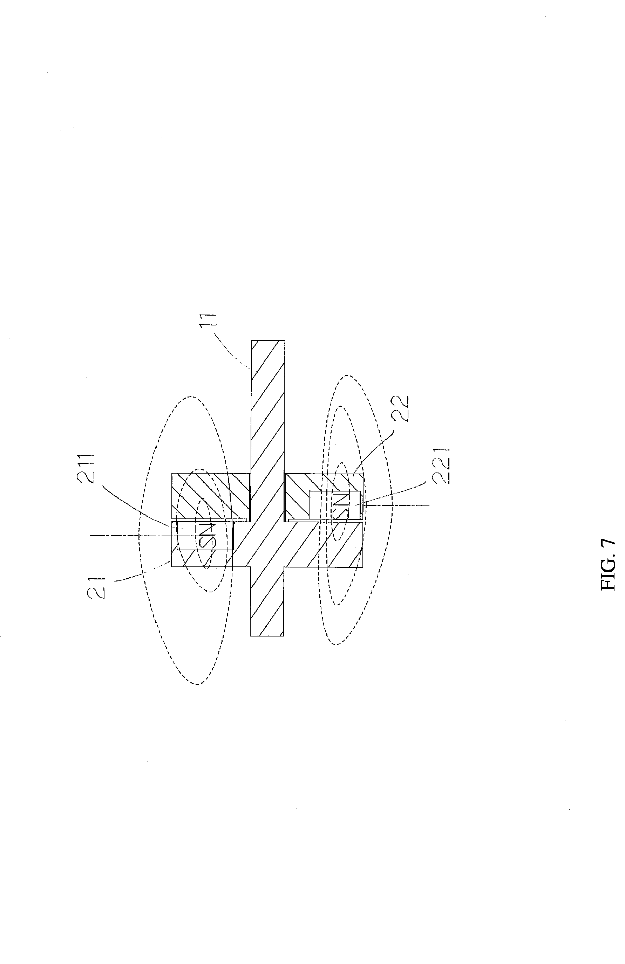

Referring to FIG. 7, besides the structure type disclosed in FIG. 5, where the magnetic repulsion generates cogging torque, the magnetic levitation clutch 2 of this invention can use the following structure type, comprising a driving part 21 located by the shaft 11 of motor 1; and a passive part 22 contacting the driving part 21. There are at least two magnetic bodies 211 in uniform distribution on the contact surface of the driving part 21 and the passive part 22. In the same way, there are at least two magnetic bodies 221 in uniform distribution on the contact surface of the passive part 22 and driving part 21, and the magnetic body 211 on the surface of the driving part 21 and the magnetic body 221 on the surface of passive part 22 are dislocated, but the polarities are opposite (i.e. N pole to S pole, or S pole to N pole). Therefore, when the magnetic levitation clutch 2 is driven, the heteropolar multiple magnetic bodies 211, 221 form attraction, generating pulling force spontaneously. Under the magnetic attraction, the driving part 21 can drive the passive part 22 to rotate slowly when it is started, and drive the passive part 22 to generate cogging torque when it is decelerated, increasing the torque of driving part 21, and reducing the counterforce generated by driving part 21 during stop.

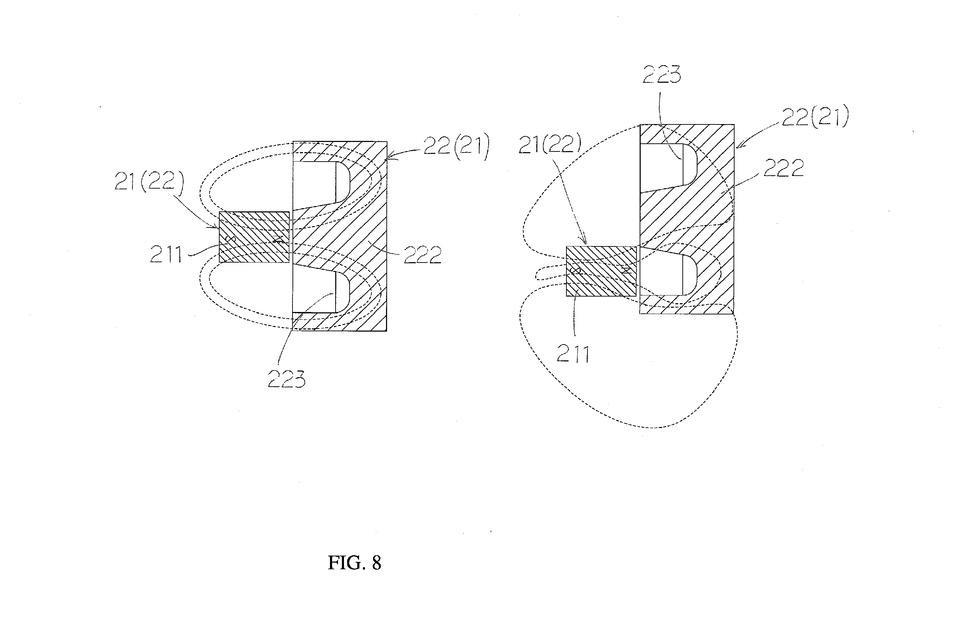

Referring to FIG. 8, the magnetic levitation clutch 2 of this invention can adopt another structure type, the driving part 21 and passive part 22 of construction unit are made of magnetic body 211 and magnetic material 222 respectively, or there are at least two separated magnetic bodies 211 and at least two separated concave 223 magnetic materials 222 dislocated on the contact surface of the driving part 21 and the passive part 22. Thus, under the magnetic attraction, the driving part 21 can drive the passive part 22 to rotate slowly when it is started, and drive the passive part 22 to generate cogging torque when it is decelerated, increasing the torque of driving part 21, and reducing the counterforce generated by driving part 21 during stop.

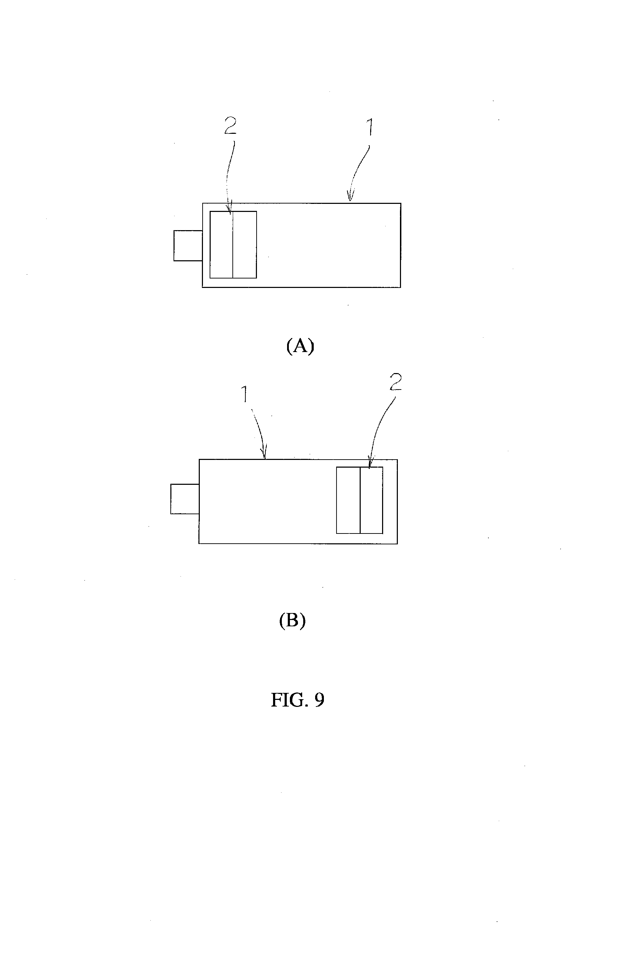

FIG. 9 - FIG. 11 are schematic diagrams of different positions of the combination of magnetic levitation clutch and motor of the present invention. FIG. 9 (A) shows the magnetic levitation clutch 2 in the front end of shaft 11 inside motor 1. FIG. 9 (B) shows the magnetic levitation clutch 2 in the rear end of shaft 11 inside motor 1.

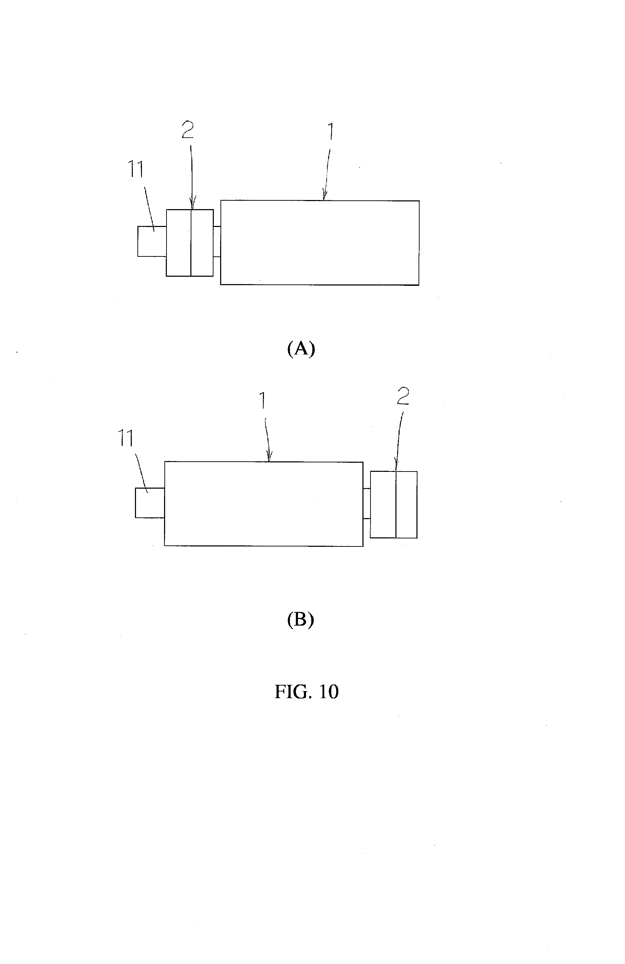

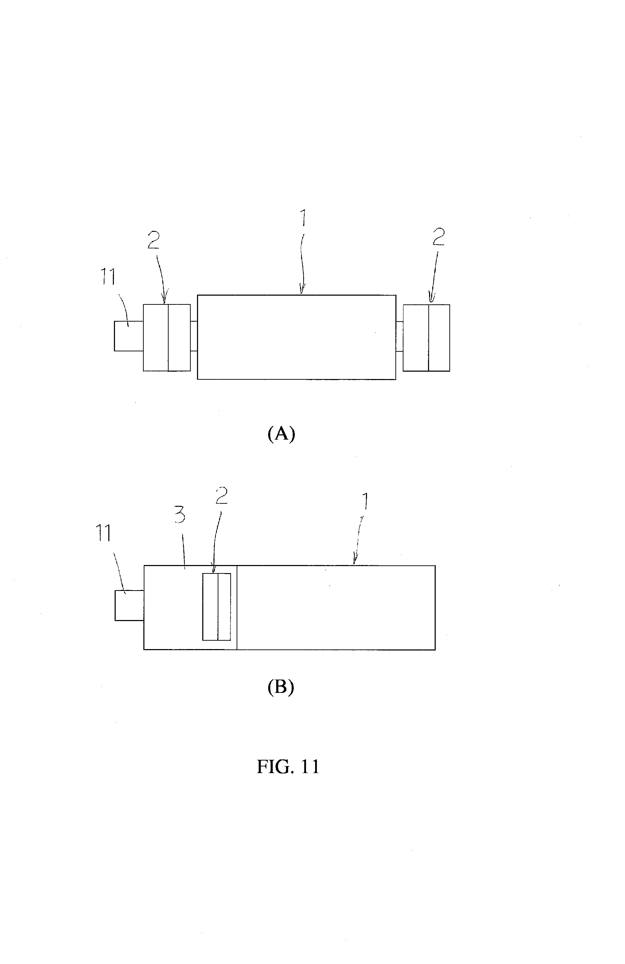

FIG. 10 (A) shows the magnetic levitation clutch 2 in the front end of shaft 11 outside motor 1. FIG. 10 (B) shows the magnetic levitation clutch 2 in the rear end of shaft 11 outside motor 1. FIG. 11 (A) shows two sets of magnetic levitation clutch 2 in the front end and rear end of shaft 11 outside motor 1 respectively. FIG. 11 (B) shows the magnetic levitation clutch 2 on the fluted disc of reducing mechanism 3 connected to the front end of shaft 11 outside motor 1, the magnetic levitation clutch 2 and the reducing mechanism 3 are integrated. All Said types with magnetic levitation clutch 2 inside or outside the motor 1, in the front end, rear end or on reducing mechanism can provide slow start and braking effect when the motor of automatic screwdriver is in operation.

### Reference numbers

- 1: motor
- 11: shaft
- 2: magnetic levitation clutch
- 21: driving part
- 22: passive part
- 23: latch
- 211: magnetic bodies
- 221: magnetic bodies
- 24: first elastic body
- 241: oil seal
- 242: collision cover
- 25: second elastic body
- 251: bearing
- 252: steel ball
- 254: retainer
- 253: brake disc
- 222: and magnetic material
- 223: separated concave
- 3: reducing mechanism

## Claims

1. Magnetic levitation brake motor (1) for automatic screwdrivers, comprising:
a motor (1), providing power source; and a magnetic levitation clutch (2), combined with the shaft (11) of the motor (1), with alternating magnetic repulsion and attraction, providing slow start and braking effect of automatic screwdriver.

2. Magnetic levitation brake motor (1) for automatic screwdrivers as claimed in Claim 1, wherein the magnetic levitation clutch (2) comprises of a driving part (21), a passive part (22) contacting the driving part (21), and a latch (23) for connecting the driving part (21) and passive part (22).

3. Magnetic levitation brake motor (1) for automatic screwdrivers as claimed in Claim 2, wherein the magnetic levitation clutch (2) comprises of a driving part (21), located by the shaft (11) of motor (1), and a passive part (22) contacting the driving part (21), and there are at least two magnetic bodies (211, 221) dislocated in uniform distribution on the contact surface of the driving part (21) and the passive part (22) respectively, and they have the same polarity.

4. Magnetic levitation brake motor (1) for automatic screwdrivers as claimed in Claim 2 or 3, wherein there is a first elastic body (24) between the driving part (21) and the passive part (22).

5. Magnetic levitation brake motor (1) for automatic screwdrivers as claimed in one of Claims 2 to 4, wherein there is a second elastic body (25) between the driving part (21) and the passive part (22).

6. Magnetic levitation brake motor (1) for automatic screwdrivers as claimed in one of the preceding Claims, wherein the magnetic levitation clutch (2) comprises of a driving part (21), located by the shaft (11) of motor (1), and a passive part (22) contacting the driving part (21), and there are at least two magnetic bodies (211, 221) dislocated in uniform distribution on the contact surface of the driving part (21) and the passive part (22) respectively, and the polarities are opposite.

7. Magnetic levitation brake motor (1) for automatic screwdrivers as claimed in one of the preceding Claims, wherein the magnetic levitation clutch (2) comprises of a driving part (21), located by the shaft (11) of motor (1), and a passive part (22) contacting the driving part (21), the driving part (21) and the passive part (22) can be made of magnetic body and magnetic material (222) respectively.

8. Magnetic levitation brake motor (1) for automatic screwdrivers as claimed in one of the preceding Claims, wherein the magnetic levitation clutch (2) comprises of a driving part (21), located by the shaft (11) of motor (1), and a passive part (22) contacting the driving part (21), there are at least two separated magnetic bodies (211, 221) and at least two separated concave (223) magnetic materials dislocated on the contact surface of the driving part (21) and the passive part (22) respectively.

9. Magnetic levitation brake motor (1) for automatic screwdrivers as claimed in one of the preceding Claims, wherein the magnetic levitation clutch (2) can be combined with the front end or rear end of the shaft (11) inside the motor (1).

10. Magnetic levitation brake motor (1) for automatic screwdrivers as claimed in one of the preceding Claims, wherein the magnetic levitation clutch (2) can be combined with the front end or rear end of the shaft (11) outside the motor (1).

11. Magnetic levitation brake motor (1) for automatic screwdrivers as claimed in one of the preceding Claims, wherein two sets of the magnetic levitation clutch (2) can be combined with the front end and rear end of the shaft (11) outside the motor (1) respectively.

12. Magnetic levitation brake motor (1) for automatic screwdrivers as claimed in one of the preceding Claims, wherein the magnetic levitation clutch (2) can be combined with the reducing mechanism (3) of the shaft (11) outside the motor (1) in the automatic screwdriver.
